# EUROPÄISCHE PATENTSCHRIFT

(11) **EP 1 970 660 B1**
(45) Veröffentlichungstag und Bekanntmachung des Hinweises auf die Patenterteilung: **30.11.2016**
(21) Anmeldenummer: 08151461.4
(22) Anmeldetag: 14.02.2008
(51) Int. Cl.: F28D 21/00, E03F 3/04, E03F 5/18

(54) **Anordnung und Verfahren zur Rückgewinnung von Wärmeenergie aus Abwässern**
Assembly and method for recovery of heat energy from waste water
Agencement et procédé destinés à la récupération d'énergie thermique à partir d'eaux usées

(30) Priorität: 16.03.2007 DE 102007013296
(43) Veröffentlichungstag der Anmeldung: 17.09.2008
(73) Patentinhaber: Huber SE, 92334 Berching (DE)
(72) Erfinder: Frommann, Christian, 92318, Neumarkt (DE); Gelhaus, Christian, 85051, Ingolstadt (DE)
(74) Vertreter: Bergmeier, Werner

(56) Entgegenhaltungen:
- EP-A1- 0 908 569
- WO-A1-93/07424
- WO-A1-93/07424
- DE-A1- 3 246 586
- DE-A1- 3 809 888
- DE-A1-102005 031 221
- DE-U1-202004 005 768
- DE-U1-202004 015 115
- US-A- 4 341 263
- US-A- 4 602 672
- US-B1- 6 193 879

## Beschreibung

Die Erfindung betrifft eine Anordnung zur Rückgewinnung von Wärmeenergie aus Abwässern, die einem Abwasserkanal zugeordnet ist, mit einem Zwischenspeicher, der über wenigstens einen Zulauf mit dem Abwasserkanal verbunden ist und einem Wärmetauscher, der dem Zwischenspeicher zugeordnet ist, wobei die Anordnung zudem eine Pumpvorrichtung aufweist, die dem Zwischenspeicher zugeordnet ist, zur Förderung von Abwasser in Richtung des Wärmetauschers sowie ein Verfahren zur Rückgewinnung von Wärmeenergie aus Abwässern.

Vorrichtungen und Verfahren zur Rückgewinnung von Wärmeenergie aus Abwässern sind bereits seit längerem bekannt.

So beschreibt die DE 20 2004 005 768 U1 ein Bauteil bzw. Bauwerk in Art und Form eines Freispiegelrohres oder Kanals, das zur konventionellen Leitung von Wasser bzw. Abwasser bestimmt ist und zusätzlich im Gerinne mit einer Wärmetauschereinrichtung zur Wärmerückgewinnung ausgestattet ist. Das Bauteil bzw. Bauwerk weist nach seiner Herstellung zumindest eine zum Wasser bzw. Abwasser hin offene Montagaussparung in der Wandung des Gerinnes zur Aufnahme einer Wärmtauschereinrichtung auf. Nach dem Einsetzen der Wärmetauschereinrichtung wird diese Montageaussparung verfüllt, so dass die Wärmetauschereinrichtung schließlich innerhalb der Wandung des Kanals angeordnet ist und somit keinen direkten Kontakt mit dem Wasser bzw. Abwasser besitzt. Zwar wird hierdurch eine Verschmutzung der Wärmetauscheroberfläche verhindert, nachteilig hierdurch ist jedoch, dass der Wärmeaustausch zwischen Abwasser und Wärmetauschereinrichtung durch die dazwischenliegende Füllschicht negativ beeinträchtigt wird.

Durch die DE 32 46 586 A1 wird ein alternatives Verfahren zur Rückgewinnung der in häuslichen Abwässern enthaltenen Wärme beschrieben. Hierbei wird die Temperatur des Abwassers innerhalb eines Abwasserrohres ständig überwacht. Sobald die gemessene Temperatur einen einstellbaren Temperaturwert überschreitet, wird das Abwasser über einen Bypass umgeleitet, in welchem dem Abwasser mit Hilfe eines Wärmetauschers Wärme entzogen wird. Das abgekühlte Abwasser wird anschließend in das Abwasserrohr weitergeleitet. Nachteilig hierbei ist jedoch, dass im Falle der Bypassöffnung das gesamte Abwasser durch diese hindurch und somit auch durch den Wärmetauscher strömen muss. Um eine Verschmutzung des Wärmetauschers zu minimieren, öffnet der Bypass daher erst ab einer bestimmten Temperatur des Abwassers. Hierdurch soll ausgeschlossen werden, dass stark verschmutztes Abwasser, beispielsweise aus einer Toilette, welches in der Regel eine geringere Temperatur als sauberes Abwasser beispielsweise aus einer Dusche aufweist, nicht in den Wärmetauscher gelangt. Eine solche Anordnung ist jedoch für den Einbau in einen Abwasserkanal nicht geeignet, da hier die Wassertemperatur durch die Vermischung zahlreicher Abwässer aus unterschiedlichsten Abwasserquellen relativ konstant und auch die Verschmutzung gleichbleibend hoch ist.

Weitere Anordnungen, mit denen sich Wärme aus in häuslichen Abwasserrohren strömendem Abwasser rückgewinnen lässt, sind in der WO 93/07424 A1 sowie der DE 38 09 888 A1 beschrieben.

Eine weitere Möglichkeit der Wärmerückgewinnung aus Abwässern beschreibt die US 4,602,672 A. Um die Energiekosten einer Wäscherei zu minimieren, wird vorgeschlagen, das bei der Wäsche anfallende Abwasser vor dem Einleiten in einen Kanal durch einen Wärmetauscher zu leiten, um mit dessen Hilfe ankommendes Frischwasser vorzuwärmen.

Schließlich offenbart die EP 0 908 569 A1 eine Siebvorrichtung für in einem Zulaufrohr ankommendes Abwasser, wobei diese eine senkrecht in einem Abwasserschacht angeordnete Siebfläche aufweist, in deren Inneren eine Schneckenfördereinrichtung zum Austrag zurückgehaltener Verunreinigungen angeordnet ist.

Es ist daher Aufgabe der vorliegenden Erfindung, eine Anordnung zur Rückgewinnung von Wärmeenergie aus Abwässern und ein entsprechendes Verfahren vorzuschlagen, durch die eine hohe Wärmerückgewinnung ermöglicht und zudem ein Verschmutzen des Wärmetauschers möglichst zuverlässig verhindert werden kann.

Diese Aufgabe wird gelöst durch die Merkmale der unabhängigen Ansprüche.

Erfindungsgemäß wird vorgeschlagen, dass die Anordnung neben dem Wärmetauscher und dem Zwischenspeicher eine Pumpvorrichtung aufweist, die dem Zwischenspeicher zugeordnet ist und der Förderung von Abwasser in Richtung des Wärmetauschers dient, wobei die Anordnung zudem einen Ablauf aufweist, der mit dem Abwasserkanal verbunden ist und über den das Abwasser nach Passieren des Wärmetauschers wieder zurück in den Abwasserkanal fließen kann.

Der Zwischenspeicher ist dabei derart angeordnet, dass das durch den Abwasserkanal strömende Abwasser zumindest teilweise durch den Zulauf in den Zwischenspeicher gelangt. Hierfür liegt der Boden des Zwischenspeichers zweckmäßigerweise tiefer als der Boden des Abwasserkanals, so dass Abwasser auch bei niedrigem Wasserstand innerhalb des Abwasserkanals in den Zwischenspeicher gelangt. Der Zwischenspeicher kann sich dabei im Inneren des Abwasserkanals, beispielsweise durch die Anordnung von entsprechenden Wandungen, oder in einer Nische in der Wand des Abwasserkanals befinden. Letztgenannte Variante hat den Vorteil, dass der Querschnitt des Abwasserkanals nicht durch Einbauten verringert wird. Jedoch wird hierdurch im Vergleich zur ersten Variante ein nachträglicher Einbau in einen bestehenden Abwasserkanal erschwert. Mit Hilfe der Pumpvorrichtung wird schließlich vom Zwischenspeicher warmes Abwasser dem Wärmetauscher zugeführt, der auf übliche Weise mit einem weiteren Sekundärkreislauf verbunden ist, dessen Medium, in der Regel Wasser, erwärmt werden soll. Nach Passieren des Wärmetauschers fließt das abgekühlte Abwasser über den Ablauf wieder zurück in den Abwasserkanal. Durch die Pumpvorrichtung wird erreicht, dass sich der Wärmetauscher an einer beliebigen Stelle befinden kann. So ist eine Anordnung des Wärmetauschers innerhalb des Zwischenspeichers, aber genauso gut auch oberirdisch, beispielsweise innerhalb eines Gebäudes möglich, wodurch eine besonders einfache Wartung desselben gewährleistet ist.

Ferner ist vorgesehen, dass der Zulauf eine Filtervorrichtung aufweist. Hierdurch wird in einfacher Weise verhindert, dass durch das Abwasser mitgeführte Verunreinigungen in den Zwischenspeicher und über die Pumpvorrichtung in den Wärmetauscher gelangen. Die Filtervorrichtung weist dabei eine Maschenweite auf, die auf die zu erwartenden Verschmutzungen angepasst ist. Führt das Abwasser beispielsweise schlammige Verunreinigungen mit sich, muss die Maschenweite entsprechend klein gewählt werden, um ein Versanden des Zwischenspeichers zu vermeiden. Handelt es sich dagegen um Abwasser mit Verunreinigungen höherer Partikelgröße, so kann auch ein entsprechendes Sieb als Filtervorrichtung dienen.

Da die Filtervorrichtung über eine Reinigungsvorrichtung verfügt, kann einer Verstopfung der Filtervorrichtung wirksam entgegengewirkt werden. Dies ist besonders vorteilhaft, wenn das Abwasser schleimige oder klebrige Bestandteile enthält, die zu einem schnellen Zusetzen der Filtervorrichtung führen würden.

Ferner weist die Reinigungsvorrichtung eine Transportschnecke auf, welche die von der Filtervorrichtung zurückgehaltene Verunreinigungen entlang der Oberfläche der Filtervorrichtung in Richtung eines Endes derselben bewegt. Durch die Drehung der Transportschnecke wird die mechanische Reinigung, die durch das Vorbeigleiten der Schneckenflügel an der Oberfläche der Filtervorrichtung bewirkt wird, zusätzlich durch eine Wasserströmung unterstützt, die durch die Drehbewegung der Schnecke erzeugt wird. Selbstverständlich können auch andere Reinigungsvorrichtungen, beispielsweise in Form von Schabern, Bürsten oder pneumatischen Einrichtungen, zum Einsatz kommen.

Vorteilhaft ist auch, wenn der Zulauf über die Filtervorrichtung mit einem Ablauf in Verbindung steht, der wiederum mit dem Abwasserkanal verbunden ist. Werden die von der Filtervorrichtung zurückgehaltenen Verunreinigungen durch die Reinigungsvorrichtung in Richtung des Ablaufes bewegt, so bewirkt der Abwasserstrom, der vom Wärmetauscher kommend über den Ablauf wieder zurück in den Abwasserkanal strömt, dass die Verunreinigungen ebenfalls in den Abwasserkanal zurückgelangen. Hierdurch wird dauerhaft und zuverlässig verhindert, dass sich Verunreinigungen über einen längeren Zeitraum im Bereich der Filtervorrichtung oder des Zu- bzw. Ablaufs ablagern können.

Auch bringt es Vorteile mit sich, wenn der Wärmetauscher ein Rücklaufrohr aufweist, dessen Ende im Bereich des Ablaufes angeordnet ist. Durch die Strömung des aus dem Wärmetauscher zurückfließenden Abwassers wird das Zurückspülen der sich auf der Filteroberfläche angesammelten Verunreinigungen in Richtung des Abwasserkanals in besonders wirksamer Weise verstärkt. Auch in diesem Fall ist es günstig, wenn die Verunreinigungen von der Reinigungsvorrichtung in den Bereich des Ablaufes transportiert werden, damit diese an dieser Stelle von der Strömung mitgerissen werden können.

Besonders vorteilhaft ist, wenn der Zulauf bezüglich des Abwasserkanalbodens erhöht angeordnet ist. Hierdurch wird erreicht, dass Verunreinigungen, die auf dem Boden des Abwasserkanals mitgeschwemmt werden, insbesondere sandige Ablagerungen, erst gar nicht in den Bereich des Zulaufs bzw. der Filtervorrichtung gelangen. Dies verhindert in präventiver Weise ein Zusetzen der Filtervorrichtung und entlastet somit die Reinigungsvorrichtung.

Ist die Pumpvorrichtung innerhalb des Zwischenspeichers angeordnet, so befindet sich diese zum einen an einer Stelle, die vor Verunreinigungen geschützt ist. Ist die Pumpvorrichtung zudem am Boden des Zwischenspeichers platziert, so kann ein Luftziehen der Pumpvorrichtung in einfacher Weise vermieden werden. Jedoch ist es auch denkbar, die Pumpe bezüglich des Zwischenspeicherbodens erhöht anzuordnen, so dass eventuell in den Zwischenspeicher gelangende sandige Ablagerungen nicht von der Pumpvorrichtung angesaugt werden.

Vorteilhafterweise ist die Reinigungsvorrichtung und/oder die Pumpvorrichtung über wenigstens eine Steuereinheit steuerbar. Hierdurch kann auf die jeweiligen Verhältnisse innerhalb der Anordnung reagiert werden. So ist es beispielsweise denkbar, dass die Reinigungsvorrichtung bei gering verschmutzten Abwässern nur intervallartig betrieben wird. Auch die Förderleistung der Pumpvorrichtung ist entsprechend dem Wärmebedarf des an den Wärmetauscher angeschlossenen Wasserkreislaufs steuerbar. Wird die Pumpvorrichtung beispielsweise ganz abgeschaltet, wenn keine Wärme benötigt wird oder die Temperatur des Abwassers für einen Wärmeentzug mittels des Wärmetauschers nicht ausreicht, so wird der Energieverbrauch und der Verschleiß insgesamt wesentlich minimiert.

Besondere Vorteile bringt es mit sich, wenn der Steuereinheit wenigstens ein Temperatursensor zugeordnet ist, welcher der Temperaturbestimmung des Abwassers dient. Durch die Anordnung mehrerer Temperatursensoren, beispielsweise innerhalb des Abwasserkanals, des Zwischenspeichers und/oder des Sekundärkreislaufes können genaue Aussagen über die mögliche Wärmeausbeute durch den Wärmetauscher gewonnen werden. Weist das Abwasser eine zu niedrige Temperatur für einen befriedigenden Wärmetausch innerhalb des Wärmetauschers auf, so ist es zweckmäßig, die Pumpvorrichtung auszuschalten oder zumindest die Förderleistung zu drosseln.

Zudem ist es von Vorteil, wenn dem Zulauf und/oder dem Ablauf wenigstens ein Abwasserleitblech zugeordnet ist. Hierdurch können die Abwasserströmungen positiv beeinflusst werden. Ist beispielsweise im Bereich des Zulaufs ein Leitblech derart angeordnet, dass dieses entgegen der Abwasserströmung im Abwasserkanal in diesen hineinragt, so wird sichergestellt, dass immer eine ausreichende Menge an warmem Abwasser durch den Zulauf in den Zwischenspeicher gelangt. Im Bereich des Auslaufs können ebenfalls oder alternativ ein oder auch mehrere Leitbleche derart angeordnet werden, dass das Abwasser, das den Wärmetauscher verlässt, gezielt über die Filtervorrichtung geleitet wird, an dem sich die Verunreinigungen ansammeln, um diese zurück in den Abwasserkanal zu spülen. Zusätzlich bewirken die Leitbleche, dass ein Vermischen des aus dem Wärmetauscher zurückfließenden abgekühlten Abwasser mit warmem, über den Zulauf in den Zwischenspeicher einfließendes Abwasser, vermischt wird. Hierdurch wird die Effizienz der Anordnung signifikant erhöht.

Besonders für Reparatur- und/oder Revisionsarbeiten an der Anordnung ist es vorteilhaft, wenn dem Zulauf und/oder dem Ablauf ein Absperrorgan, beispielsweise in Form eines Schiebers oder eines entsprechenden Ventils zugeordnet ist. Wird das Absperrorgan geschlossen, so kann die Anordnung, insbesondere die Filtervorrichtung, trocken gelegt werden, ohne dass weiteres Abwasser in die Anordnung strömen kann. Nach Beendigung der Reparatur- und/oder Revisionsarbeiten werden die entsprechenden Absperrorgane wieder geöffnet, so dass die erfindungsgemäße Anordnung wieder in Betrieb genommen werden kann.

Ist dem Zulauf eine steuerbare Verschließeinrichtung zugeordnet, so ist die Menge des zulaufenden Abwassers aus dem Abwasserkanal in den Zwischenspeicher in einfacher Weise steuerbar. Die Steuerung kann dabei beispielsweise mit einem Temperatursensor verbunden sein. Weist das Abwasser innerhalb des Abwasserkanals eine Temperatur auf, die unter der Temperatur liegt, die das Abwasser innerhalb des Zwischenspeichers besitzt, so ist es zweckmäßig, die Verschließeinrichtung zu verschließen, um eine Abkühlung des Abwassers innerhalb des Zwischenspeichers zu vermeiden. Gleichzeitig können auch die Pumpvorrichtung und/oder die Reinigungsvorrichtung angesteuert werden, um einen Betrieb der Vorrichtung bei ungünstigen (Temperatur-) Verhältnissen einzuschränken. Als Verschließeinrichtungen können hierbei verschiedenste Vorrichtungen, wie beispielsweise Tellerventile oder unterschiedlichste Schieber, zum Einsatz kommen. Denkbar ist ebenfalls, das Abwasserleitblech, das sich im Bereich des Zulaufs befindet, schwenkbar auszubilden, so dass dieses eine Doppelfunktion erfüllt.

Wenn sich der Wärmetauscher und/oder die Pumpvorrichtung außerhalb des Zwischenspeichers befinden, so ist eine Reparatur oder ein Austausch der einzelnen Bauteile in einfacher Weise möglich. Auch kann es zweckmäßig sein, den Wärmetauscher innerhalb eines Gebäudes unterzubringen, falls dieser mit mehreren Verbrauchern in Kontakt steht. Hierdurch kann die Anzahl der notwendigen Rohrverbindungen in einfacher Weise möglichst gering gehalten werden.

In einer besonders vorteilhaften Ausgestaltung der Filtervorrichtung ist diese in Form eines Filterkorbs ausgebildet. Der Vorteil einer derartigen Ausgestaltung liegt darin, dass der Filterkorb innerhalb des Zwischenspeichers vertikal angeordnet werden kann. Somit wird für die Filtervorrichtung innerhalb des Zwischenspeichers nur eine verhältnismäßig kleine Grundfläche benötigt. Die von dem Filterkorb zurückgehaltenen Verunreinigungen werden schließlich beispielsweise mit Hilfe einer Transportschnecke, die dem Filterkorb zugeordnet ist, in Richtung des Ablaufs transportiert und durch das vom Wärmetauscher zurückströmende Abwasser zurück in den Abwasserkanal gespült.

Auch ist es von Vorteil, wenn der Zulauf, der Ablauf und/oder das Rücklaufrohr aus mehreren Einzelteilen bestehen, die über eine lösbare Verbindung miteinander verbunden sind. Die genannten Einrichtungen sind in den meisten Fällen wenigstens zum Teil fest in die Abwasserkanalwand oder eine der Wandungen des Zwischenspeichers integriert. Durch die lösbare Verbindung kann die Filtervorrichtung nun von diesen Teilen getrennt werden und aus dem Zwischenspeicher entfernt werden. Dies ist besonders für Revisions- und/oder Reparaturarbeiten von enormem Vorteil.

Ist der Filtervorrichtung dabei wenigstens eine Führungsvorrichtung zugeordnet, so erleichtert diese eine Entfernung der Filtervorrichtung aus dem Zwischenspeicher. Die Filtervorrichtung kann dabei, insbesondere nach Lösen der genannten Verbindungen, beispielsweise mit Hilfe eines Kranes durch eine Öffnung des Zwischenspeichers nach oben gezogen werden, während die Führungsvorrichtung ein Verkanten der Filtervorrichtung verhindert.

Ein Abwasserkanal weist eine erfindungsgemäße Anordnung zur Rückgewinnung von Wärmeenergie aus Abwässern gemäß der vorangegangenen Beschreibung auf. Die Anordnung kann dabei in bestehende Abwasserkanäle nachträglich integriert werden oder aber auch bereits bei der Planung von Neubauten mitberücksichtigt werden.

Das Verfahren gemäß der Erfindung zur Rückgewinnung von Wärmeenergie aus Abwässern zeichnet sich dadurch aus, dass Abwasser aus einem Abwasserkanal über wenigstens einen Zulauf in einen Zwischenspeicher geleitet wird, das Abwasser aus diesem Zwischenspeicher mittels einer Pumpvorrichtung durch wenigstens einen Wärmetauscher gepumpt wird, und dass das vom Wärmetauscher zurückfließende abgekühlte Abwasser über einen Ablauf wieder in den Abwasserkanal zurückgelangt. Durch die Zwischenschaltung eines Zwischenspeichers wird erreicht, dass das Abwasser dem Wärmetauscher nicht direkt aus dem Abwasserkanal zugeführt wird. Abwässer eines Abwasserkanals sind im Gegensatz zu den meisten häuslichen Abwässern, die beispielsweise durch Wäschewaschen oder Duschen entstehen, immer auch durch Fäkalien, Sand oder sonstige Verunreinigungen verschmutzt. Durch das Zwischenschalten eines strömungsberuhigten Zwischenspeichers können sich derartige Verunreinigungen absetzten oder an der Oberfläche des Abwassers ansammeln. Wird das Abwasser durch eine Pumpvorrichtung an einer günstigen Stelle innerhalb des Zwischenspeichers entnommen, so werden hierdurch Verunreinigungen des Wärmetauschers und auch der Pumpvorrichtung im Vergleich zur direkten Entnahme aus dem Abwasserkanal zuverlässig verhindert.

Besonders vorteilhaft ist es, dass das aus dem Abwasserkanal zufließende Abwasser im Bereich des Zulaufs mittels einer Filtervorrichtung gefiltert wird. Hierdurch kann einer Verunreinigung des Wärmetauschers und auch der Pumpvorrichtung wirkungsvoll entgegengetreten werden, was sich besonders positiv auf die Betriebszeiten der jeweiligen Vorrichtungen, aber auch auf den Wärmeübergang an den Wärmetauscheroberflächen auswirkt.

Da die durch die Filtervorrichtung zurückgehaltenen Verschmutzungen zudem durch eine Reinigungsvorrichtung in Richtung des Ablaufs bewegt werden, wird in einfacher Weise erreicht, dass sich die Filtervorrichtung nicht mit Verunreinigungen zusetzt.

Besonders vorteilhaft ist es, wenn die Strömung des vom Wärmetauscher zurückfließenden Abwassers eine Rückspülung der von der Filtervorrichtung zurückgehaltenen Verunreinigungen in den Abwasserkanal bewirkt. Da diese Strömung zwangsläufig durch die Pumpvorrichtung bewirkt wird, wird hierdurch gewährleistet, dass es zu einer besonders energieeffizienten und wirkungsvollen Ausspülung der Verunreinigungen in den Abwasserkanal kommt.

In diesem Fall ist es vorteilhaft und energetisch günstig, wenn eine Vermischung des vom Wärmetauscher zurückfließenden abgekühlten Abwassers mit dem über den Zulauf in den Zwischenspeicher gelangenden Abwasser weitgehend verhindert wird. Dies kann zum einen durch die Anordnung von Abwasserleitblechen erreicht werden. Zudem ist es aber auch möglich, dass das Rücklaufrohr des Wärmespeichers in dem Bereich in den Ablauf mündet, an dem die Verunreinigungen durch die Reinigungsvorrichtung angesammelt werden. Hierbei verhindern die Verunreinigungen selbst, dass das Abwasser in Richtung des Zulaufs und über die Filtervorrichtung auch zurück in den Zwischenspeicher gelangen kann. Ist die Reinigungsvorrichtung in Form einer Transportschnecke ausgebildet, so ist es auch möglich, dass die Flügel der Schnecke so ausgebildet sind, dass sie selbst einen übermäßigen Rücklauf des abgekühlten Abwassers in Richtung des Zulaufs verhindern. Vorteile bringt es auch mit sich, wenn die Förderleistung der Pumpvorrichtung in Abhängigkeit der Abwassertemperatur innerhalb des Abwasserkanals und/oder des Zwischenspeichers gesteuert wird. Somit wird erreicht, dass ausschließlich Abwasser in den Wärmetauscher gepumpt wird, das eine ausreichende Temperatur aufweist und somit eine effiziente Wärmerückgewinnung erlaubt.

Im Folgenden wird die Erfindung anhand von Figuren erläutert. Es zeigen:
**Figur 1a, b** eine schematische Draufsicht (1a) sowie eine Schnittdarstellung (1b) entlang der Linie A-A in Fig. 1a einer nichterfindungsgemäßen Anordnung,
**Figur 2a, b** eine schematische Draufsicht (2a) sowie eine Schnittdarstellung (2b) entlang der Linie B-B in Fig. 2a einer erfindungsgemäßen Anordnung mit einer Reinigungsvorrichtung,
**Figur 3** eine weitere schematische Draufsicht einer erfindungsgemäßen Anordnung mit einer Reinigungsvorrichtung, und
**Figur 4a, b** eine schematische Draufsicht (4a) sowie eine Schnittdarstellung (4b) einer erfindungsgemäßen Anordnung mit einer vertikal angeordneten Filtervorrichtung.

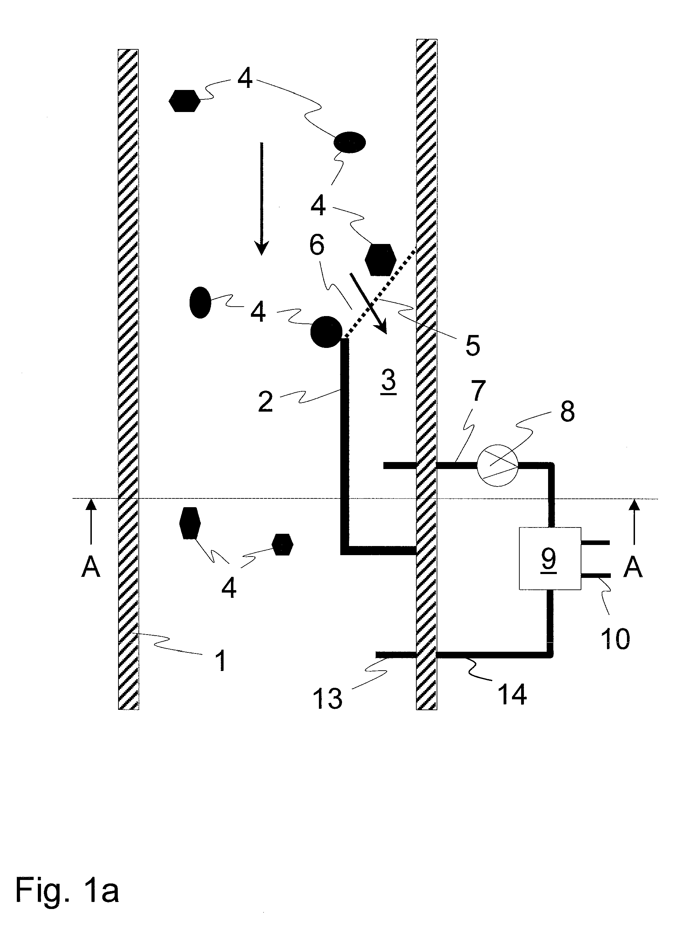

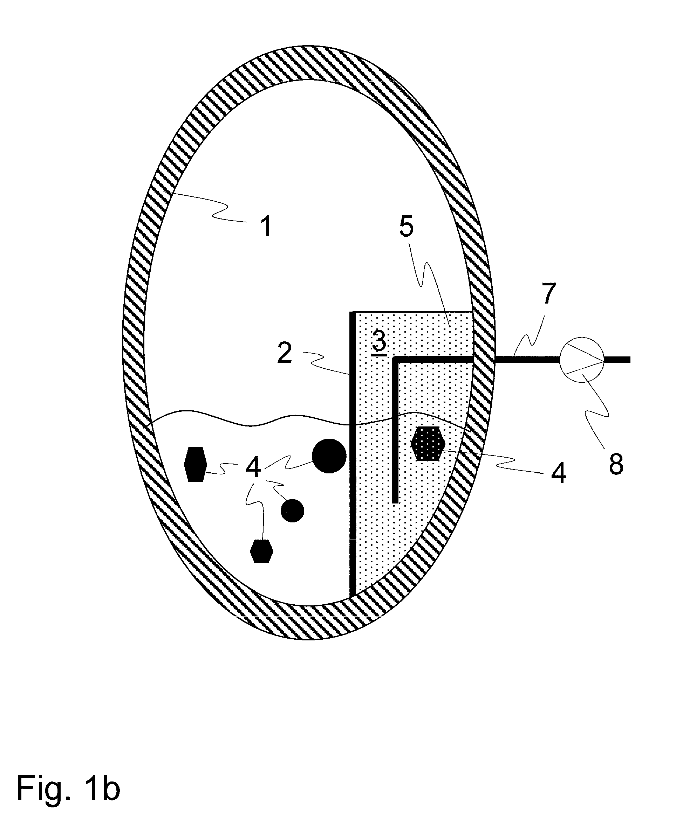

Figur 1 zeigt eine besonders einfache Ausgestaltung einer Anordnung zur Rückgewinnung von Wärmeenergie aus Abwässern. In den Abwasserkanal 1 ist eine L-förmige Trennwand 2 eingesetzt, welche die vertikale Wandung des Zwischenspeichers 3 darstellt.

Um ein Einschwämmen von Verunreinigungen 4 zu vermeiden, weist der Zwischenspeicher 3 an seiner strömungszugewandten Seite eine Filtervorrichtung in Form eines Siebbleches 5 auf, welches gleichzeitig den Zulauf 6 des Zwischenspeichers 3 bildet. Die Abwasserströmung ist durch Pfeile gekennzeichnet. Das Abwasser strömt durch dieses Siebblech 5 und sammelt sich innerhalb des Zwischenspeichers 3 bis zur Höhe des Abwasserspiegels im Abwasserkanal 1 (siehe Fig. 1 b).

In den Zwischenspeicher 3 mündet eine Rohrleitung 7, der eine Pumpvorrichtung 8 zugeordnet ist. Das der Pumpvorrichtung 8 abgewandte Ende der Rohrleitung 7 ist wiederum mit einem Wärmetauscher 9 verbunden, der seinerseits mit einem Sekundärkreislauf 10 in Verbindung steht, durch den das zu erwärmende Wasser strömt. Nach dem Passieren des Wärmetauschers 9 wird das abgekühlte Abwasser schließlich wieder über einen Ablauf 13 in den Abwasserkanal 1 zurückgeleitet. Dabei ist es zweckmäßig, wenn das abgekühlte Abwasser in Strömungsrichtung nach dem Zulauf 6 in den Abwasserkanal 1 geleitet wird, um zu vermeiden, dass abgekühltes Abwasser durch den Zulauf 6 erneut in den Zwischenspeicher 3 gelangt.

Durch die schräge Anordnung des Siebbleches 5 ist eine Reinigungsvorrichtung in der Regel überflüssig, da das Siebblech 5 durch die Strömung des Abwassers kontinuierlich von mitgeschwemmten Verunreinigungen 4 freigespült wird.

Vorteilhaft ist zudem, wenn der Zwischenspeicher 3 nach oben hin ebenfalls verschlossen ist, um zu vermeiden, dass bei erhöhtem Wasserstand innerhalb des Abwasserkanals 1, beispielsweise bedingt durch starke Regenfälle, Verunreinigungen 4 in den Zwischenspeicher 3 gelangen.

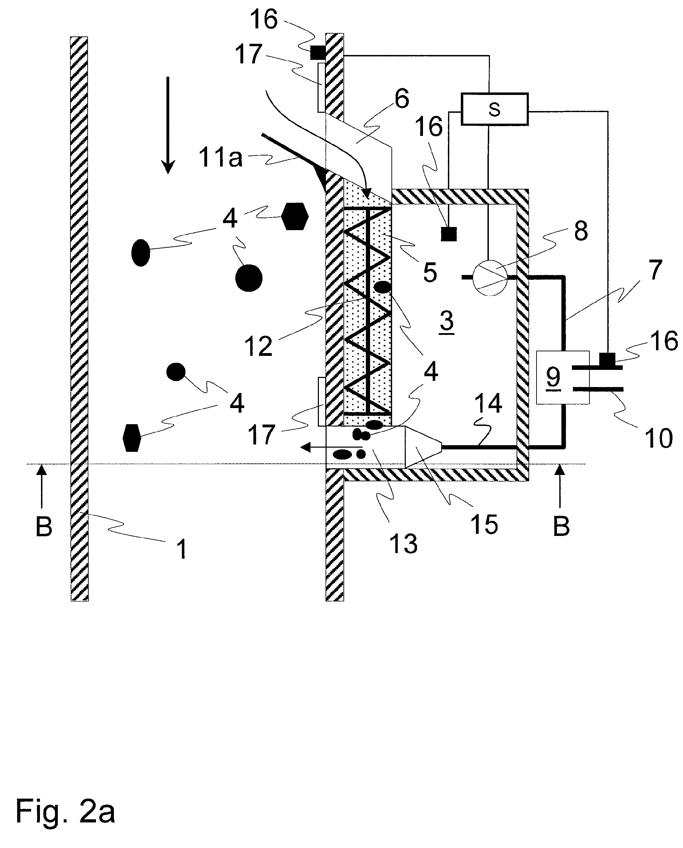

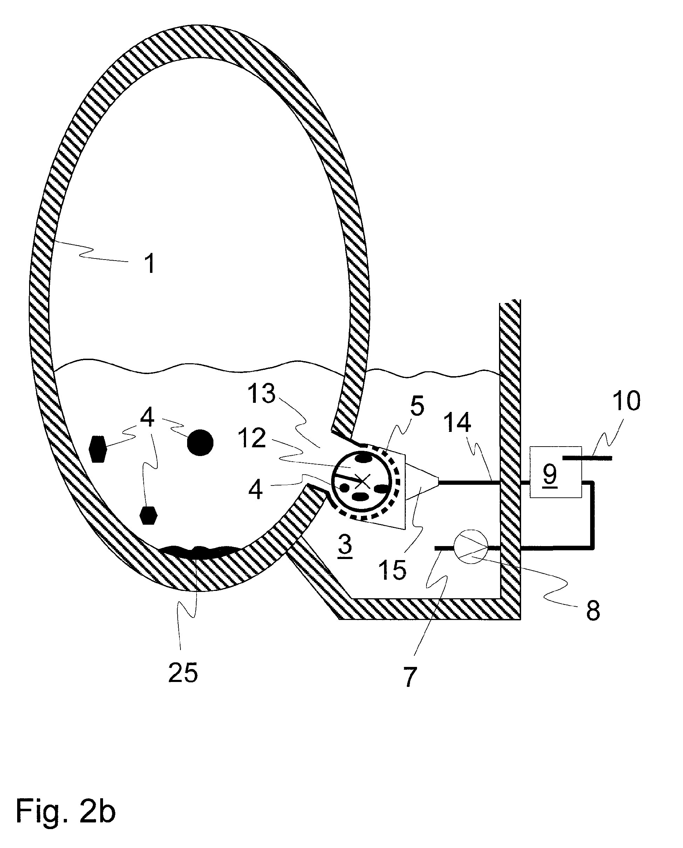

In Figur 2 ist eine weitere Ausgestaltung der erfindungsgemäßen Anordnung schematisch dargestellt. Diese weist ebenfalls einen Zwischenspeicher 3 auf, der über einen Zulauf 6 mit einem Abwasserkanal 1 verbunden ist. Der Zwischenspeicher kann nach oben hin beliebig, beispielsweise unter Integration eines Mannloches, verschlossen sein. Um einen Druckausgleich innerhalb des Zwischenspeichers 3 zu gewährleisten, ist es jedoch sinnvoll, dem Zwischenspeicher 3 eine nicht dargestellte Entlüftungsöffnung zuzuordnen. Der Zulauf 6 ist bezüglich des Abwasserkanalbetts erhöht angeordnet, um eine unnötige Belastung der Filtervorrichtung durch am Boden des Abwasserkanals 1 mitgeschwemmte Sinkstoffe, beispielsweise Sand 25, zu vermeiden.

Um den Volumenstrom des durch den Zulauf 6 in den Zwischenspeicher 3 strömenden Abwassers zu erhöhen, ist dem Zulauf 6 ein Abwasserleitblech 11a zugeordnet (in Fig. 2b nicht dargestellt).

Das Abwasser strömt jedoch nicht direkt über den Zulauf 6 in den Zwischenspeicher 3, sondern muss hierfür zunächst eine im Wesentlichen zylinderförmige Filtervorrichtung in Form eines Siebbleches 5, passieren. Um einem Zusetzen der Filterporen durch vom Abwasser mitgeführte Verunreinigungen 4 entgegenzuwirken, ist der Filtervorrichtung eine Reinigungsvorrichtung in Form einer Transportschnecke 12 zugeordnet. Diese bewegt durch ihre Drehung Verunreinigungen 4 vom Zulauf 6 in Richtung des Ablaufs 13.

Des Weiteren ist dem Zwischenspeicher 3 eine externe Pumpe 8 sowie ein externer Wärmetauscher 9 zugeordnet. Sowohl der Wärmetauscher 9 als auch die mit diesem in Verbindung stehende Pumpvorrichtung 8 können dabei beispielsweise in einem angrenzenden Bauwerk angeordnet sein, wodurch eine einfache Wartung bzw. ein Austausch der Vorrichtungen gewährleistet wird. Wie in Figur 2 gezeigt, ist aber auch eine Anordnung der Pumpvorrichtung 8 innerhalb des Zwischenspeichers 3 möglich.

Da die von der Filtervorrichtung zurückgehaltenen Verunreinigungen 4 an der Stelle, an der sich die Anordnung befindet, nicht immer entsorgt werden können, ist es vorteilhaft, wenn diese wieder zurück in den Abwasserkanal 1 geschwemmt werden. Hierfür weist der Wärmetauscher 9 ein Rücklaufrohr 14 auf, dessen Ende in den Bereich des Ablaufs 13 mündet. Hierdurch kann die Strömung des abgekühlten Abwassers, welches durch die Pumpvorrichtung 8 erzeugt wird, genutzt werden, um Verunreinigungen 4 zurück in den Abwasserkanal 1 zu spülen. Die Effizienz kann dabei durch die Anordnung von nicht gezeigten Strömungsleitblechen verbessert werden, die eine Vermischung des abgekühlten Abwassers mit warmem, in den Zwischenspeicher 3 gelangenden Abwassers nahezu vermeiden. Auch kann es vorteilhaft sein, am Ende des Rücklaufrohres 14 einen Diffusor 15 anzuordnen, um die Strömungsverhältnisse im Bereich des Ablaufes 13 weiter zu verbessern.

In Fig. 2a sind zudem Temperatursensoren 16 gezeigt, die mit einer Steuereinheit S verbunden sind. Diese können im Abwasserkanal 1, im Zwischenspeicher 3 und/oder innerhalb des Sekundärkreislaufes 10 des Wärmetauschers 9 angeordnet sein. Hierdurch ist eine ständige Kontrolle der entsprechenden Temperaturen bzw. Temperaturunterschiede möglich. Die Steuereinheit S regelt dabei die Förderleistung der Pumpvorrichtung 8 entsprechend der detektierten Daten. Ist beispielsweise die Temperatur im Zwischenspeicher 3 geringer als im Sekundärkreislauf 10, so kann dem Abwasser keine Wärmeenergie entzogen werden, die Pumpe 8 wird in diesem Fall abgeschaltet. Denkbar wäre auch ein beweglich gelagertes Abwasserleitblech 11 a, dass von einem nicht dargestellten Motor in Richtung des Zulaufs 6 geklappt werden kann und diesen verschließt, falls das Abwasser innerhalb des Abwasserkanals 1 eine geringere Temperatur als das Abwasser innerhalb des Zwischenspeichers 3 aufweist. Hierdurch wird die Filtervorrichtung entlastet. Parallel ist es selbstverständlich auch möglich und sinnvoll, die Reinigungsvorrichtung ebenfalls abzuschalten. Auch die Förderleistung der Pumpvorrichtung 8 sollte in einem solchen Fall heruntergefahren werden, um ein Luftziehen der Pumpe 8 zu vermeiden.

Natürlich können Pumpvorrichtung 8 und/oder Reinigungsvorrichtung auch mit nicht dargestellten Füllstandssensoren in Verbindung stehen. Hierdurch kann sichergestellt werden, dass die Anordnung nicht betrieben wird, wenn der Abwasserkanal 1 kein oder nur sehr wenig Abwasser führt.

Dem Zulauf 6 und dem Ablauf 13 sind zudem Absperrorgane, beispielsweise in Form von Absperrschiebern 17, zugeordnet. Hierdurch können Zulauf 6 und Ablauf 13 geschlossen werden, falls an der Anordnung Reparaturen und/oder Revisionsarbeiten vorgenommen werden müssen, um ein Eindringen von Abwasser zu verhindern.

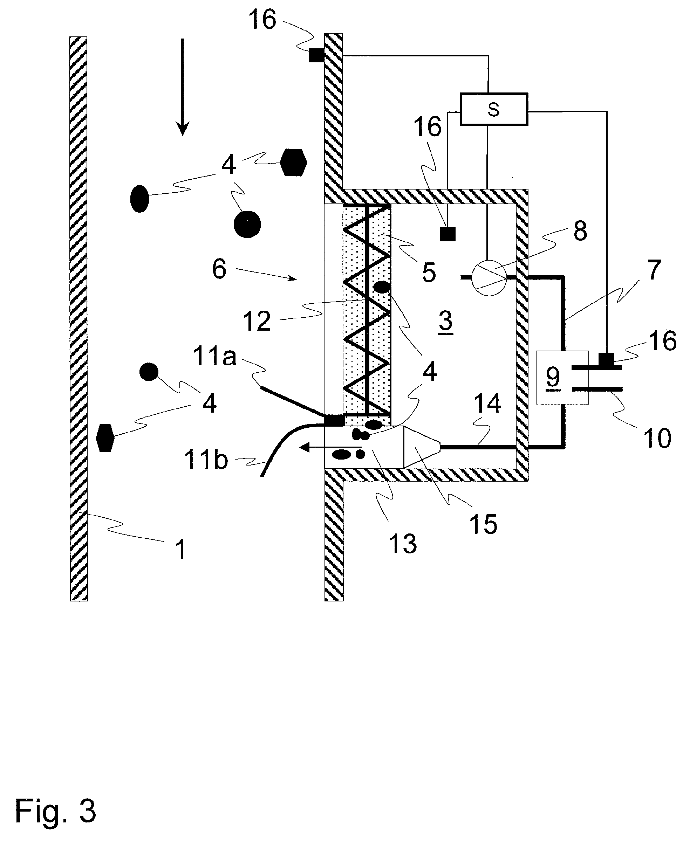

Figur 3 zeigt eine schematische Draufsicht der erfindungsgemäßen Anordnung, die im Wesentlichen der Ansicht aus Figur 2a entspricht. Während der Zulauf 6 in Figur 2a derart angeordnet ist, dass das Abwasser die Filtervorrichtung axial bezüglich der Abwasserkanallängsachse durchströmt, erlaubt die Anordnung gemäß Figur 3 eine radiale Anströmung der Filtervorrichtung.

Zudem ist der Anordnung neben einem Abwasserleitblech 11a im Bereich des Zulaufs 6 ein weiteres Abwasserleitblech 11 b im Bereich des Ablaufs 13 zugeordnet. Hierdurch wird erreicht, dass abgeschiedene Verunreinigungen 4 sowie das abgekühlte Abwasser nach dem Passieren des Wärmetauschers 9 derart umgelenkt wird, dass es möglichst von dem im Abwasserkanal 1 strömenden Abwasser mitgerissen wird. Einer erneuten Zuleitung des abgekühlten Abwassers sowie der zurückgespülten Verunreinigungen 4 über den Zulauf 6 in die Anordnung kann hierdurch auf einfache Weise entgegengewirkt werden.

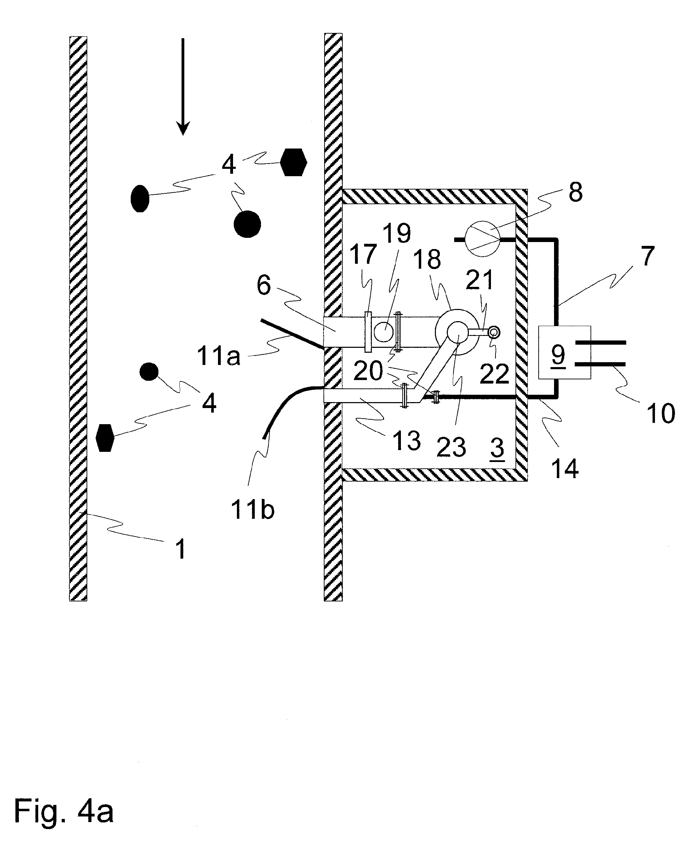

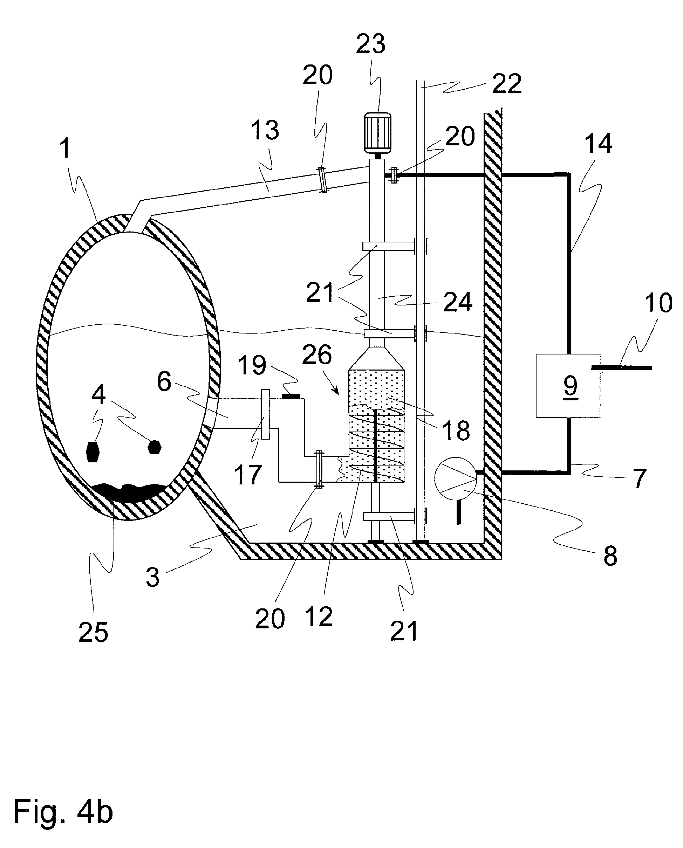

In Figur 4 ist ein weiteres Ausführungsbeispiel der erfindungsgemäßen Anordnung dargestellt. Die Filtervorrichtung ist hierbei als Filterkorb 26 mit einem Siebmantel 18 ausgebildet. Der Zulauf 6, dem ebenfalls ein Absperrschieber 17 zugeordnet sein kann, ist nach unten hin abgewinkelt, damit der Filterkorb 26 innerhalb des Zwischenspeichers 3 möglichst tief angeordnet werden kann.

In dem Filterkorb 26 selbst befindet sich eine über einen Antrieb 23 angetriebene Transportschnecke 12, durch die vom Siebmantel 18 zurückgehaltene Verunreinigungen 4 über ein Verbindungsstück 24 in Richtung des Ablaufs 13 gefördert werden.

Das Abwasser, das den Siebmantel 18 passiert, wird von einer Pumpvorrichtung 8 angesaugt und an einen Wärmetauscher 9, der mit einem Sekundärkreislauf 10 verbunden ist, weiterbefördert. Das Rücklaufrohr 14, durch welches das abgekühlte Abwasser vom Wärmetauscher 9 zurückströmt, mündet schließlich im Bereich des Ablaufs 13 in das Verbindungsstück 24 und befördert die nach oben geförderten Verunreinigungen 4 durch den Ablauf 13, der als Schwemmrinne ausgebildet ist, zurück in den Abwasserkanal 1. Der Ablauf 13 ist derart angeordnet, dass er bezüglich der Strömungsrichtung des Abwassers innerhalb des Abwasserkanals 1 nach dem Zulauf 6 in denselben mündet, um ein Vermischen von abgekühltem und noch warmem Abwasser zu vermeiden. Zudem ist es von Vorteil, wenn der Ablauf 13 mit dem Bereich des Abwasserkanals 1, der sich oberhalb des Abwasserspiegels befindet, in Verbindung steht. Hierdurch wird auf einfache Weise verhindert, dass Abwasser durch den Ablauf 13 in die Anordnung gelangen kann. Auf ein Absperrorgan im Bereich des Ablaufs 13 kann in diesem Fall verzichtet werden. Des Weiteren ist eine Führungsvorrichtung 22 abgebildet. An der Führungsvorrichtung 22 ist der Filterkorb 26 und das Verbindungsstück 24 über Haltearme 21 gleitend befestigt. Zusätzlich sind der Zulauf 6, der Ablauf 13 sowie das Rücklaufrohr 14 zweiteilig ausgebildet, wobei die jeweiligen Einzelelemente durch lösbare Verbindungen 20 miteinander verbunden sind. Nach dem Lösen der Verbindungen 20 ist es in einfacher Weise möglich, die Filtervorrichtung entlang der Führungsvorrichtung 22 aus dem Zwischenspeicher 3, beispielsweise mit Hilfe eines Kranes, herauszuziehen. Hierdurch wird die Wartung und/oder Reparatur der entsprechenden Elemente bedeutend vereinfacht.

Dem Zulauf 6 ist zudem ein Notüberlauf 19 zugeordnet, der beispielsweise bei einem Ausfall der Filtervorrichtung automatisch öffnet. Hierdurch wird gewährleistet, dass trotz Verstopfung des Filterkorbes 26 ein kontinuierliches Einströmen von warmem Abwasser in den Zwischenspeicher 3 sichergestellt ist und weiterhin eine Wärmenutzung über den Wärmetauscher 9 erfolgen kann. Der Wärmetauscher 9 müsste in einem derartigen Fall bei Bedarf gereinigt werden.

Die vorliegende Erfindung wurde anhand von Ausführungsbeispielen näher erläutert. Abwandlungen der Erfindung sind im Rahmen der Patentansprüche ohne weiteres möglich, wobei ausdrücklich sämtliche in der Beschreibung und den Figurenbeschreibungen aufgeführten Merkmale in beliebiger Kombination miteinander verwirklicht werden können, soweit dies sinnvoll und möglich erscheint.

## Patentansprüche

1. Anordnung zur Rückgewinnung von Wärmeenergie aus Abwässern, die einem Abwasserkanal (1) zugeordnet ist, mit einem Zwischenspeicher (3), der über wenigstens einen Zulauf (6) mit dem Abwasserkanal (1) verbunden ist und einem Wärmetauscher (9), der dem Zwischenspeicher (3) zugeordnet ist, wobei die Anordnung zudem eine Pumpvorrichtung (8) aufweist, die dem Zwischenspeicher (3) zugeordnet ist, zur Förderung von Abwasser in den Wärmetauscher (9), und wobei die Anordnung einen Ablauf (13) aufweist, der mit dem Abwasserkanal (1) verbunden ist und über den das Abwasser nach Passieren des Wärmetauschers (9) wieder zurück in den Abwasserkanal (1) fließen kann, wobei der Zulauf (6) eine Filtervorrichtung aufweist, die über eine Reinigungsvorrichtung verfügt, **dadurch gekennzeichnet, dass** die Reinigungsvorrichtung eine Transportschnecke (12) aufweist.

2. Anordnung nach dem vorangegangenen Anspruch, **dadurch gekennzeichnet, dass** der Zulauf (6) über die Filtervorrichtung mit dem Ablauf (13) in Verbindung steht.

3. Anordnung nach einem oder mehreren der vorangegangenen Ansprüche, **dadurch gekennzeichnet, dass** der Wärmetauscher (9) ein Rücklaufrohr (14) aufweist, dessen Ende im Bereich des Ablaufes (13) angeordnet ist.

4. Anordnung nach einem oder mehreren der vorangegangenen Ansprüche, **dadurch gekennzeichnet, dass** der Zulauf (6) bezüglich des Abwasserkanalbodens erhöht angeordnet ist.

5. Anordnung nach einem oder mehreren der vorangegangenen Ansprüche, **dadurch gekennzeichnet, dass** die Pumpvorrichtung (8) innerhalb des Zwischenspeichers (3) angeordnet ist.

6. Anordnung nach einem oder mehreren der vorangegangenen Ansprüche, **dadurch gekennzeichnet, dass** die Reinigungsvorrichtung und/oder die Pumpvorrichtung (8) über wenigstens eine Steuereinheit (S) steuerbar ist.

7. Anordnung nach Anspruch 6, **dadurch gekennzeichnet, dass** der Steuereinheit (S) wenigstens ein Temperatursensor (16) zugeordnet ist.

8. Anordnung nach einem oder mehreren der vorangegangenen Ansprüche, **dadurch gekennzeichnet, dass** dem Zulauf (6) und/oder dem Ablauf (13) wenigstens ein Abwasserleitblech (11) zugeordnet ist.

9. Anordnung nach einem oder mehreren der vorangegangenen Ansprüche, **dadurch gekennzeichnet, dass** dem Zulauf (6) und/oder dem Ablauf (13) ein Absperrorgan zugeordnet ist.

10. Anordnung nach einem oder mehreren der vorangegangenen Ansprüche, **dadurch gekennzeichnet, dass** dem Zulauf (6) eine steuerbare Verschließeinrichtung zugeordnet ist.

11. Anordnung nach einem oder mehreren der vorangegangenen Ansprüche, **dadurch gekennzeichnet, dass** sich der Wärmetauscher (9) und/oder die Pumpvorrichtung (8) außerhalb des Zwischenspeichers (3) befinden.

12. Anordnung nach einem oder mehreren der vorangegangenen Ansprüche, **dadurch gekennzeichnet, dass** die Filtervorrichtung in Form eines Filterkorbs (26) ausgebildet ist.

13. Anordnung nach einem oder mehreren der vorangegangenen Ansprüche, **dadurch gekennzeichnet, dass** Zulauf (6), Ablauf (13) und/oder Rücklaufrohr (14) aus mehreren Einzelteilen bestehen, die über wenigstens eine lösbare Verbindung (20) miteinander verbunden sind.

14. Anordnung nach einem oder mehreren der vorangegangenen Ansprüche, **dadurch gekennzeichnet, dass** der Filtervorrichtung wenigstens eine Führungseinrichtung (22) zugeordnet ist.

15. Anordnung nach einem oder mehreren der vorangegangenen Ansprüche, **dadurch gekennzeichnet, dass** dem Zulauf (6) ein Notüberlauf (19) zugeordnet ist.

16. Verfahren zur Rückgewinnung von Wärmeenergie aus Abwässern, wobei Abwasser aus einem Abwasserkanal (1) über wenigstens einen Zulauf (6) in einen Zwischenspeicher (3) geleitet wird und aus diesem Zwischenspeicher (3) mittels einer Pumpvorrichtung (8) durch wenigstens einen Wärmetauscher (9) gepumpt wird, und wobei das vom Wärmetauscher (9) zurückfließende abgekühlte Abwasser über einen Ablauf (13) wieder in den Abwasserkanal (1) zurückgelangt, und wobei das Abwasser im Bereich des Zulaufs (6) mittels einer Filtervorrichtung , welche eine Reinigungsvorrichtung aufweist, gefiltert wird, **dadurch gekennzeichnet, dass** durch die Filtervorrichtung zurückgehaltene Verunreinigungen (4) durch die Reinigungsvorrichtung, die eine Transportschnecke (12) aufweist, in Richtung des Ablaufs (13) bewegt werden.

17. Verfahren nach Anspruch 16, **dadurch gekennzeichnet, dass** die Strömung des vom Wärmetauscher (9) zurückfließenden Abwassers eine Rückspülung der von der Filtervorrichtung zurückgehaltenen Verunreinigungen (4) in den Abwasserkanal (1) bewirkt.

18. Verfahren nach Anspruch 16 oder 17, **dadurch gekennzeichnet, dass** eine Vermischung des vom Wärmetauscher (9) zurückfließenden Abwassers mit dem über den Zulauf (6) in den Zwischenspeicher (3) gelangenden Abwassers weitgehend verhindert wird.

19. Verfahren nach einem oder mehreren der Ansprüche 16 bis 18, **dadurch gekennzeichnet, dass** die Förderleistung der Pumpvorrichtung (8) in Abhängigkeit der Abwassertemperatur innerhalb des Abwasserkanals (1) und/oder des Zwischenspeichers (3) gesteuert wird.

## Claims

1. An arrangement for reclaiming heat energy from wastewater and associated with a sewer line (1), having an intermediate storage (3) connected to the sewer line (1) by means of at least one inlet (6) and having a heat exchanger (9) associated with the intermediate storage (3), the arrangement further comprising a pump device (8) associated with the intermediate storage (3) for transporting wastewater into the heat exchanger (9), and the arrangement comprising a discharge (13) connected to the sewer line (1) and through which the wastewater can flow back into the sewer line (1) after passing through the heat exchanger (9), the inlet (6) comprising a filter device having a cleaning device, **characterized in that** the cleaning device comprises a conveyor screw (12).

2. The arrangement according to the preceding claim, **characterized in that** the inlet (6) is connected to the discharge (13) by means of the filter device.

3. The arrangement according to any one or more of the preceding claims, **characterized in that** the heat exchanger (9) comprises a return line (14), the end thereof being disposed in the region of the discharge (13).

4. The arrangement according to any one or more of the preceding claims, **characterized in that** the inlet (6) is elevated relative to the floor of the sewer line.

5. The arrangement according to any one or more of the preceding claims, **characterized in that** the pump device (8) is disposed within the intermediate storage (3).

6. The arrangement according to any one or more of the preceding claims, **characterized in that** the cleaning device and/or the pump device (8) can be controlled by means of at least one control unit (S).

7. The arrangement according to claim 6, **characterized in that** at least one temperature sensor (16) is associated with the control unit (S).

8. The arrangement according to any one or more of the preceding claims, **characterized in that** at least one wastewater guide vane (11) is associated with the inlet (6) and/or the discharge (13).

9. The arrangement according to any one or more of the preceding claims, **characterized in that** a shutoff device is associated with the inlet (6) and/or the discharge (13).

10. The arrangement according to any one or more of the preceding claims, **characterized in that** a controllable closing device is associated with the inlet (6).

11. The arrangement according to any one or more of the preceding claims, **characterized in that** the heat exchanger (9) and/or the pump device (8) is disposed outside of the intermediate storage (3).

12. The arrangement according to any one or more of the preceding claims, **characterized in that** the filter device is implemented in the form of a filter basket (26).

13. The arrangement according to any one or more of the preceding claims, **characterized in that** the inlet (6), discharge (13), and/or return line (14) are made of a plurality of individual parts connected to each other by means of at least one removable connection (20).

14. The arrangement according to any one or more of the preceding claims, **characterized in that** at least one guide device (22) is associated with the filter device.

15. The arrangement according to any one or more of the preceding claims, **characterized in that** an emergency overflow (19) is associated with the inlet (6).

16. A method for reclaiming heat energy from wastewater, the wastewater being guided into an intermediate storage (3) from a sewer line (1) via at least one inlet (6) and pumped out of said intermediate storage (3) by means of a pump device (8) through at least one heat exchanger (9), and the cooled wastewater flowing back from the heat exchanger (9) returning into the sewer line (1) via a discharge (13), and the wastewater being filtered in the region of the inlet (6) by means of a filter device comprising a cleaning device, **characterized in that** impurities (4) retained by the filter device are transported in the direction of the discharge (13) by the cleaning device comprising a conveyor screw (12).

17. The method according to claim 16, **characterized in that** the flow of the wastewater returning from the heat exchanger (9) brings about backflushing of the impurities (4) retained by the filter device into the sewer line (1).

18. The method according to claim 16 or 17, **characterized in that** mixing of the wastewater flowing back from the heat exchanger (9) and the wastewater entering the intermediate storage (3) via the inlet (6) is largely prevented.

19. The method according to one or more of the claims 16 through 18, **characterized in that** the transport capacity of the pump device (8) is controlled as a function of the wastewater temperature within the sewer line (1) and/or the intermediate storage (3).

## Revendications

1. Arrangement pour la récupération d'énergie calorifique depuis des eaux résiduaires qui sont attribuées à une canalisation (1) d'eaux résiduaires, avec un réservoir de stockage intermédiaire (3), lequel est relié avec la canalisation d'eaux résiduaires (1) via au moins une arrivée (6), et un échangeur de chaleur (9), qui est attribué au réservoir de stockage intermédiaire (3), dans lequel l'arrangement comporte en outre un dispositif de pompage (8), qui est attribué au réservoir de stockage intermédiaire (3) pour le refoulement de l'eau résiduaire dans l'échangeur de chaleur (9), et dans lequel l'arrangement comporte un déversoir (13), qui est relié avec la canalisation d'eau résiduaire (1) et via lequel l'eau résiduaire, après avoir traversé l'échangeur de chaleur (9), peut couler à nouveau dans la canalisation d'eau résiduaire (1), sachant que l'arrivée (6) comporte un dispositif de filtrage comportant un dispositif de nettoyage, **caractérisé en ce que** le dispositif de nettoyage comporte une vis de transport (12).

2. Arrangement selon la revendication précédente, **caractérisé en ce que** l'arrivée (6) est en relation avec le déversoir (13) via le dispositif de filtrage.

3. Arrangement selon l'une ou plusieurs des revendications précédentes, **caractérisé en ce que** l'échangeur de chaleur (9) comporte une conduite de retour (14), dont l'extrémité est disposée dans la zone du déversoir (13).

4. Arrangement selon l'une ou plusieurs des revendications précédentes, **caractérisé en ce que** l'arrivée (6) est disposée en élévation par rapport au fond de la canalisation d'eau résiduaire.

5. Arrangement selon l'une ou plusieurs des revendications précédentes, **caractérisé en ce que** le dispositif de pompage (8) est disposé au sein du réservoir de stockage intermédiaire (3).

6. Arrangement selon l'une ou plusieurs des revendications précédentes, **caractérisé en ce que** le dispositif de nettoyage et/ou le dispositif de pompage (8) sont/est commandable(s) via au moins une unité de commande (S).

7. Arrangement selon la revendication 6, **caractérisé en ce qu'**au moins un capteur de température (16) est attribué à l'unité de commande (S).

8. Arrangement selon l'une ou plusieurs des revendications précédentes, **caractérisé en ce qu'**au moins un déflecteur (11) d'eau résiduaire est attribué à l'arrivée (6) et/ou au déversoir (13).

9. Arrangement selon l'une ou plusieurs des revendications précédentes, **caractérisé en ce qu'**un dispositif de coupure est attribué à l'arrivée (6) et/ou au déversoir (13).

10. Arrangement selon l'une ou plusieurs des revendications précédentes, **caractérisé en ce qu'**un dispositif d'obturation commandable est attribué à l'arrivée (6).

11. Arrangement selon l'une ou plusieurs des revendications précédentes, **caractérisé en ce que** l'échangeur de chaleur (9) et/ou le dispositif de pompage (8) sont disposé(s) hors du réservoir de stockage intermédiaire (3).

12. Arrangement selon l'une ou plusieurs des revendications précédentes, **caractérisé en ce que** le dispositif de filtrage se présente sous la forme d'un panier filtrant (26).

13. Arrangement selon l'une ou plusieurs des revendications précédentes, **caractérisé en ce que** l'arrivée (6), le déversoir (13) et/ou la conduite de retour (14) se composent de plusieurs pièces individuelles, qui sont reliées les unes avec les autres via au moins un assemblage démontable (20).

14. Arrangement selon l'une ou plusieurs des revendications précédentes, **caractérisé en ce qu'**au moins un dispositif de guidage (22) est attribué au dispositif de filtrage.

15. Arrangement selon l'une ou plusieurs des revendications précédentes, **caractérisé en ce qu'**un déversoir de secours (19) est attribué à l'arrivée (6).

16. Procédé pour la récupération d'énergie calorifique depuis des eaux résiduaires, dans lequel l'eau résiduaire est acheminée dans un réservoir de stockage intermédiaire (3) depuis une canalisation d'eau résiduaire (1) via au moins une arrivée (6) et, depuis ce réservoir de stockage intermédiaire (3), pompée à l'aide d'un dispositif de pompage (8) à travers au moins un échangeur de chaleur (9), et dans lequel l'eau résiduaire refroidie refluant depuis l'échangeur de chaleur (9) se déverse à nouveau dans la canalisation d'eau résiduaire (1) via un déversoir (13), et dans lequel l'eau résiduaire est filtrée dans la zone de l'arrivée (6) à l'aide d'un dispositif de filtrage comportant un dispositif de nettoyage, **caractérisé en ce que** les impuretés (4) retenues par le dispositif de filtrage sont acheminées dans la direction du déversoir (13) par le dispositif de nettoyage, qui comporte une vis de transport (12).

17. Procédé selon la revendication 16, **caractérisé en ce que** l'écoulement d'eau résiduaire refluant depuis l'échangeur de chaleur (9) provoque un lavage à contre-courant, dans la canalisation d'eau résiduaire (1), des impuretés (4) retenues par le dispositif de filtrage.

18. Procédé selon la revendication 16 ou 17, **caractérisé en ce qu'**un mélange de l'eau résiduaire refluant depuis l'échangeur de chaleur (9) avec l'eau résiduaire se déversant dans le réservoir de stockage intermédiaire (3) via l'arrivée (6) est quasiment empêché.

19. Procédé selon l'une ou plusieurs des revendications 16 à 18, **caractérisé en ce que** la puissance de refoulement du dispositif de pompage (8) est commandée en fonction de la température de l'eau résiduaire dans la canalisation d'eau résiduaire (1) et/ou le réservoir de stockage intermédiaire (3).
